# EUROPEAN PATENT SPECIFICATION

(11) **EP 1 641 236 B1**
(45) Date of publication and mention of the grant of the patent: **07.04.2010**
(21) Application number: 05020610.1
(22) Date of filing: 21.09.2005
(51) Int. Cl.: H04N 1/00

(54) **Image processing apparatus**
Bildverarbeitungsvorrichtung
Appareil de traitement d'images

(30) Priority: 22.09.2004 JP 2004276048
(43) Date of publication of application: 29.03.2006
(73) Proprietor: Sharp Kabushiki Kaisha, Osaka-shi, Osaka 545-8522 (JP)
(72) Inventor: Okamoto, Yuji, Souraku-gun Kyoto 619-0232 (JP); Fujiwara, Katsuyoshi, Osaka 590-0445 (JP); Ueda, Naofumi, Kyoto 619-0225 (JP); Yoshiura, Syoichiro, Nara 639-1061 (JP)
(74) Representative: Müller - Hoffmann & Partner

(56) References cited:
- EP-A- 0 706 283
- US-A1- 2001 017 717
- US-B1- 6 175 714
- PATENT ABSTRACTS OF JAPAN vol. 1995, no. 05, 30 June 1995 (1995-06-30) & JP 07 038747 A (RICOH CO LTD), 7 February 1995 (1995-02-07)
- PATENT ABSTRACTS OF JAPAN vol. 018, no. 232 (P-1731), 27 April 1994 (1994-04-27) & JP 06 020027 A (MINOLTA CAMERA CO LTD), 28 January 1994 (1994-01-28)
- PATENT ABSTRACTS OF JAPAN vol. 017, no. 280 (P-1547), 28 May 1993 (1993-05-28) & JP 05 012422 A (CANON INC), 22 January 1993 (1993-01-22)
- PATENT ABSTRACTS OF JAPAN vol. 016, no. 579 (E-1299), 18 December 1992 (1992-12-18) & JP 04 227365 A (CANON INC), 17 August 1992 (1992-08-17)

## Description

### BACKGROUND OF THE INVENTION

### 1. Field of the Invention

The present invention relates to an image processing apparatus for reading an image recorded on originals, and performing processing such as copying (printing) or facsimile communication or the like, and more particularly to an image processing apparatus for limiting the processing of the read image based on the contents of the image being read.

### 2. Description of the Related Art

Owing to the advancement of image processing technology, it is possible to copy an original image at high fidelity. In particular, by improvement of color print quality, a full color copy of high quality not distinguished easily from the original can be obtained. Similarly, an image of high quality can be transmitted by facsimile communication, or electronic image data of high quality can be produced.

The image handled by such image processing apparatus capable of copying an image precisely may contain confidential information of which free duplication should be prohibited, such as personal information and corporate secret document. Hitherto, various technologies have been developed to regulate the image copying process of image processing apparatus. Such examples are disclosed in Japanese Patent Application Laid-Open No. 4-227365 (1992), Japanese Patent Application Laid-Open No. 5-12422 (1993), Japanese Patent Application Laid-Open No. 6-20027 (1994), and Japanese Patent Application Laid-Open No. 7-38747 (1995), in which a specific pattern is added to an original image, and when such a specific pattern is included in the original image read by the image processing apparatus for copying the image, the copying process of this image is prohibited. Therefore, according to these technologies, by preliminarily recording a specific pattern in the image containing confidential information, unauthorized copy of confidential information can be prevented.

In such technologies, however, even a person having official rights to copy the confidential information, such as the author of the confidential document, cannot copy the confidential information. To solve such problem, when processing the image, the user is authenticated by using a password or the like, and copying of the image is permitted when the user is authenticated to have official rights to copy the protected image. To enhance the security of preventing illegal duplication of confidential information, a long password may be used, or password and ID card are combined, and the operation for authenticating authorized user is complicated, and it is contradictory to convenience.

### BRIEF SUMMARY OF THE INVENTION

The invention is devised in the light of the above background, and it is hence an object thereof to provide an image processing apparatus enhanced in convenience by authenticating the user easily while maintaining the security when reading and processing the original image.

It is other object of the invention to provide an image processing apparatus capable of setting easily to permit or prohibit processing such as copying of part of original image.

It is also an object of the invention to provide an image processing apparatus capable of preventing illegal copying of confidential image more securely.

It is another object of the invention to provide an image processing apparatus capable of suppressing lowering of processing speed when processing images of a plurality of originals.

An image processing apparatus of the invention is an image processing apparatus comprising: an original mounting unit on which an original is mounted; an image reading unit for reading the original image recorded on the original mounted on the original mounting unit and generating image data expressing the original image; and an image processing unit for processing the image data generated by the image reading unit; wherein the image reading unit generates image data depending on the mounting state of the original on the original mounting unit, and is characterized by comprising: a registration unit preliminarily registering a predetermined image data expressing a predetermined image, and layout state information showing predetermined layout state of the predetermined image on original image; predetermined image judging means for judging whether the predetermined image is included or not in the image expressed by the image data generated by the image reading unit on the basis of the predetermined image data registered in the registration unit; layout state judging means for judging whether the layout state of the predetermined image in the image is the predetermined layout state or not, on the basis of the layout state information registered in the registration unit when the predetermined image judging means judges that the predetermined image is included; deciding means for deciding whether or not to permit processing of the image data by the image processing unit depending on the judging result by the layout state judging means; and means for permitting or prohibiting processing of the image data by the image processing unit depending on the decision result by the deciding means.

Thus, in such invention, original image recorded on the original mounted on a mounting unit is read, and the image data showing the image depending on the state such as the direction of the original of the original being mounted on the mounting unit when the original image is read is generated. When a predetermined image is contained in the image expressed by image data, further, position or layout state of the predetermined image in the image is judged, and when the layout state of the predetermined image coincides with specified layout state, processing of image data is permitted, and when the layout state of the predetermined image does not coincide with the predetermined layout state, processing of image data is prohibited.

Accordingly, the invention prevents execution of image processing by a user not knowing the predetermined mounting state of the original necessary for permitting image processing. However, only the user having official rights to be permitted to copy the original image is preliminarily informed to the predetermined mounting state of the original permitted to process the image for copying the original image, and hence the user having the official rights is authenticated. The user is authenticated only by selecting an adequate mounting state of the original, and hitherto required complicated operation for authenticating the user is not necessary, and convenience of image processing apparatus is enhanced.

An image processing apparatus of the invention is based on the above image processing apparatus and is characterized in that the layout state information registered in the registration unit is information showing position of the predetermined image in the image expressed by the image data generated by the image reading unit, and the layout state judging means judges the position of the predetermined image in the image expressed by the image data.

In the invention, the position of the predetermined image in the image expressed by image data is judged as the predetermined layout state.

An image processing apparatus of the invention is based on the above image processing apparatus and is characterized in that the layout state information registered in the registration unit is information showing direction of the predetermined image in the image expressed by the image data generated by the image reading unit, and the layout state judging means judges the direction of the predetermined image in the image expressed by the image data.

In the invention, the direction of the predetermined image in the image expressed by image data is judged as the predetermined layout state.

An image processing apparatus of the invention is based on the above image processing apparatus and is characterized in that the layout state information registered in the registration unit is information showing number of the predetermined images in the image expressed by image data generated by the image reading unit, and the layout state judging means judges the number of the predetermined images in the image expressed by the image data.

In the invention, the number of the predetermined images in the image expressed by image data is judged as the predetermined layout state.

Accordingly, in the invention, image processing is prohibited when the number of the predetermined images is less than a predetermined number as the number of the predetermined images included in the image is judged as the layout state. In this case, it is possible to prevent illegal image processing of copying part of original image containing plural predetermined images. To the contrary, when the number of the predetermined images is less than a predetermined number, image processing is permitted, and the user having official rights can copy part of the original image, while an unauthorized user is prevented from copying the whole original image.

An image processing apparatus of the invention is based on the above image processing apparatus and is characterized by further comprising: an identification information registration unit preliminarily registering identification information of a user; and an identification information accepting unit for accepting identification information of a user; wherein the identification information accepting unit accepts identification information of a user when the judging result by the layout state judging means coincides with the layout state information, and the deciding means permits processing of the image data by the image processing unit when the identification information accepted by the identification information accepting unit is preliminarily registered in the identification information registration unit.

In such invention, when the layout state of the predetermined image coincides with the predetermined layout state, user's identification information is accepted, and processing of image data is permitted when preliminarily registered identification information is accepted.

Therefore, according to the invention, when the layout state of the predetermined image in the image coincides with the predetermined layout state necessary for permitting image processing, the user is authenticated whether or not to have official rights for copying the original image. Hence, illegal image processing of original image by the user not having official rights for copying original image is securely prevented. On the other hand, the user having official rights can be authenticated easily by using a password shorter than in the prior art, and the authentication process necessary for preventing illegal copy of confidential information to keep same security as in the prior art can be simplified, and convenience of image processing apparatus can be enhanced.

An image processing apparatus of the invention is based on the above image processing apparatus and is characterized in that the original mounting unit can mount a plurality of originals, the image reading unit can generate a plurality of image data by sequentially reading the original images recorded on the plurality of originals mounted on the original mounting unit, and the deciding means decides whether or not to permit processing of the plurality of image data by the image processing unit on the basis of the judging result by the layout state judging unit about the images expressed by the specific image data in the plurality of image data generated by the image reading unit.

In such invention, plural originals can be read sequentially, and it is decided whether or not to permit image processing of plural originals on the basis of the judging result of the layout state of the predetermined image about a specific original.

According to the invention, therefore, when reading plural originals sequentially, by authenticating the user about a specific original, plural original images can be wholly processed. It is hence not necessary to authenticate each original sequentially, and the time for processing images of whole of plural originals can be shortened.

An image processing apparatus of the invention is based on the above image processing apparatus and is characterized by further comprising: a storage unit for temporarily storing the image data generated by the image reading unit and then outputting to the image processing unit; and invalidating means for, when the deciding means decides not to permit processing of image data by the image processing unit, invalidating the image data stored in the storage unit decided not to permit processing, without outputting to the image processing unit.

In such invention, when processing of image data is prohibited, stored image data is invalidated.

According to the invention, therefore, when image processing is prohibited, since the stored image data is invalidated, the image data stored in the image processing apparatus is prevented from being taken out to outside by unauthorized user, so that the safety of preventing illegal copying of confidential information can be enhanced.

The above and further objects and features of the invention will more fully be apparent from the following detailed description with accompanying drawings.

### BRIEF DESCRIPTION OF THE SEVERAL VIEWS OF THE DRAWINGS

FIG. 1 is a functional block diagram of internal configuration of image processing apparatus of the invention;
FIG. 2 is a schematic side sectional view of example of configuration of image reading unit;
FIG. 3A, FIG. 3B and FIG. 3C are schematic diagrams showing examples of original images limited in image processing;
FIG. 4A, FIG. 4B, FIG. 4C and FIG. 4D are schematic diagrams showing examples of images expressed by image data generated on the basis of original images;
FIG. 5A, FIG. 5B, FIG. 5C and FIG. 5D are schematic diagrams showing examples of images expressed by image data generated on the basis of original images;
FIG. 6A, FIG. 6B and FIG. 6C are schematic diagrams showing examples of images expressed by image data generated on the basis of original images;
FIG. 7 is a flowchart of procedure of image processing of the image processing apparatus of the invention; and
FIG. 8 is a flowchart of procedure of image processing of the image processing apparatus of the invention.

### DETAILED DESCRIPTION OF THE PRESENT INVENTION

The invention is specifically described below by referring to preferred embodiments together with accompanying drawings.

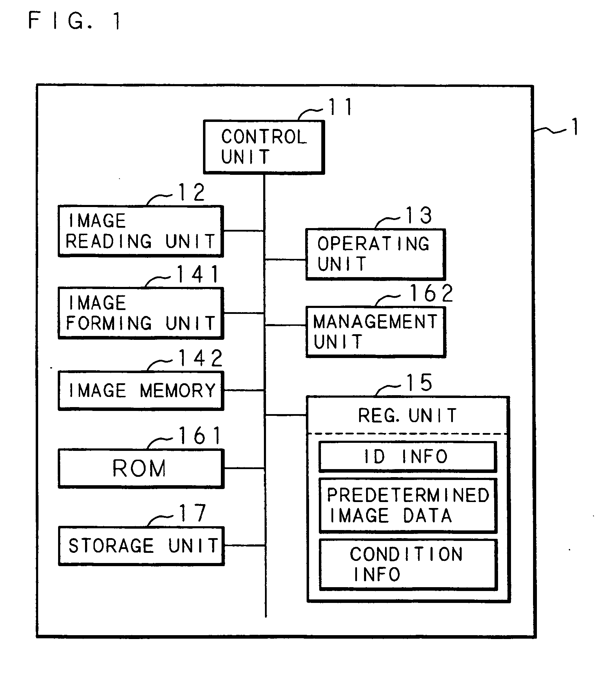

FIG. 1 is a functional block diagram of internal configuration of image processing apparatus of the invention. An image processing apparatus 1 comprises a control unit 11 composed of a CPU for performing arithmetic operations, and a RAM and others for storing temporary information by arithmetic operations. To the control unit 11, a ROM 161 storing a control program for controlling the image processing apparatus 1, and a management unit 162 as a memory storing management information for managing the process conducted by the image processing apparatus 1 are connected. Also to the control unit 11, an image reading unit 12 for reading an original image recorded on the originals and generating image data is connected.

To the control unit 11, a storage unit 17 composed of a hard disk, an optical disk or the like is further connected. The storage unit 17 stores the image data generated by the image reading unit 12. Also to the control unit 11, an image memory 142 for temporarily storing image data, and an image forming unit 141 for forming an image from image data stored in the image memory 142 and recording on a recording paper are connected. The control unit 11 stores the image data generated by the image reading unit 12 temporarily in the storage unit 17, reads out image data from the storage unit 17 to store it in the image memory 142, and makes the image forming unit 141 form an image on the basis of the image data. In this embodiment, the image forming unit 141 is, for example, a printer, and hence image processing is printing-out of image on recording paper. In the case where the image processing apparatus 1 is provided with a facsimile communication apparatus, the image processing is facsimile transmission.

To the control unit 11, an operating unit 13 for accepting operation by the user is also connected. The operating unit 13 consists of a display unit such as a liquid crystal panel for displaying information necessary for operation, and an input unit such as a touch panel or a numeric key pad for entering information of control command and others by user's operation.

The image processing apparatus 1 of the invention limits image processing for forming an image from the image data in the image forming unit 141 when the image shown by the image data includes a predetermined image showing a print of seal marking "SECRET" or the like. A registration unit 15 preliminarily registering information necessary for limiting image processing is connected to the control unit 11. The registration unit 15 is composed of a nonvolatile storage device such as a semiconductor memory or a hard disk, and preliminarily stores a predetermined image data showing a predetermined image, that is, the data is registered preliminarily. The registration unit 15 also registers preliminarily identification information such as password for identifying a specified user preliminarily permitted to process the image of which processing is limited, that is, the user having official rights.

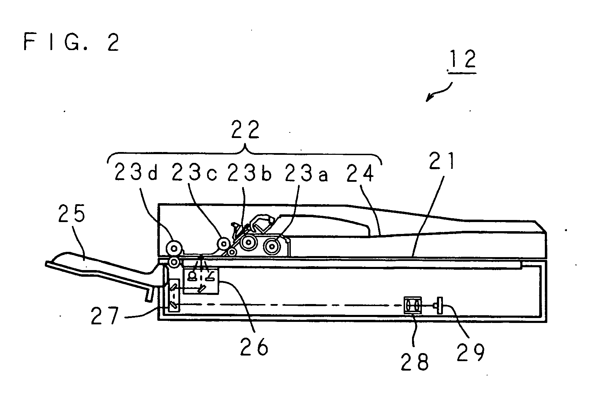

FIG. 2 is a schematic side sectional view of example of configuration of the image reading unit 12. The image reading unit 12 is provided with an original platen 21 made of a transparent glass plate for mounting an original, and an ADF (automatic document feeder) 22 on the upper side of the original platen 21. The ADF 22 includes a tray 24 capable of mounting plural originals, pick-up rollers 23a, 23b, 23c for picking up the originals mounted on the tray 24 one by one, and a discharge roller 23d for discharging the picked up originals into a discharge tray 25. Both the original platen 21 and the ADF 22 function as a mounting unit of the invention, respectively. The image reading unit 12 has a sensor (not shown) for detecting whether the original is mounted or not on the original platen 21 or tray 24 of ADF 22.

The image reading unit 12 has a head unit 26 including a light source for emitting light to the original platen 21 in a line in main scanning direction in the depth direction in the drawing, at the lower side of the original platen 21. The light emitted to the original platen 21 from the light source of the head unit 26 is reflected from the original mounted on the original platen 21 or the original picked up by the pick-up rollers 23a, 23b, 23c of ADF 22, depending on the recorded image. Further, the image reading unit 12 is provided with a mirror unit 27 including a plurality of mirrors for reflecting the light reflected from the original and guiding into the direction of a line sensor 29 described below, a lens unit 28 for converging the light guided from the mirror unit 27, and the line sensor 29 as an optical sensor for detecting the light converged by the lens unit 28. The line sensor 29 is composed of a multiplicity of CCDs arranged in the main scanning direction.

The head unit 26 having such configuration can move in the sub scanning direction, that is, lateral direction in FIG. 2. Therefore, the head unit 26 moves and emits light to the original on the original platen 21, and the line sensor 29 detects the light reflected from the original, and the original image recorded on the original mounted on the original platen 21 can be read. To the original which is picked up by the pick-up rollers 23a, 23b, 23c and is moving, the head unit 26 in standstill state emits light, and the light reflected from the original is detected by the line sensor 29, so that the image recorded on the original picked up by the ADF 22 can be read. The image reading unit 12 may be also configured to read the reverse side of the original mounted on the original platen 21 of the side facing the head unit 26 of the original picked up by the pick-up rollers 23a, 23b, 23c.

The image reading unit 12 generates image data showing the image depending on a state such as a direction of the original or the like when the original is mounted on the original platen 21 or ADF 22, on the basis of the original image read by the line sensor 29. For example, when the original is mounted so that the longitudinal direction of a rectangular original may direct to the main scanning direction, image data showing a long image is generated. Or when a partly concealed original is mounted, an image data showing a shape of image except the concealed portion from the original is generated.

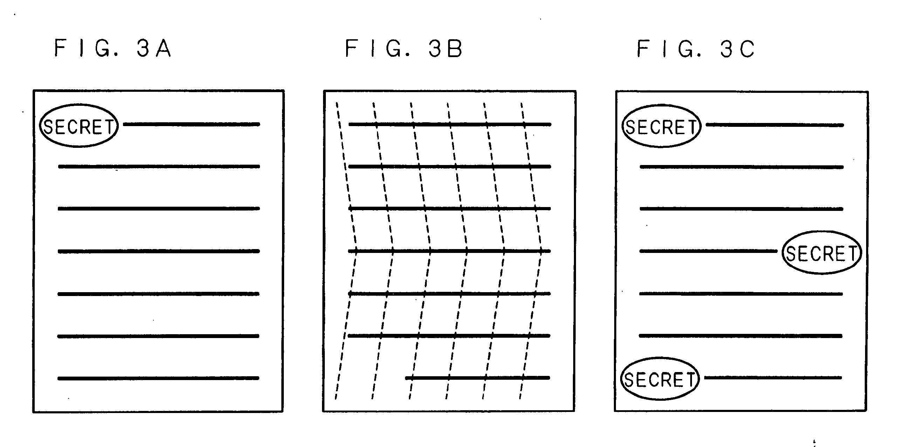

FIG. 3A, FIG. 3B and FIG. 3C are schematic diagrams showing examples of original images limited in image processing. In the example shown in FIG. 3A, the original image includes a predetermined image having letter of "SECRET" showing the content is confidential information. In the example shown in FIG. 3B, the entire original image includes a pattern indicated by broken line as a predetermined image. In the example shown in FIG. 3C, the original image includes a plurality of predetermined images having letter of "SECRET".

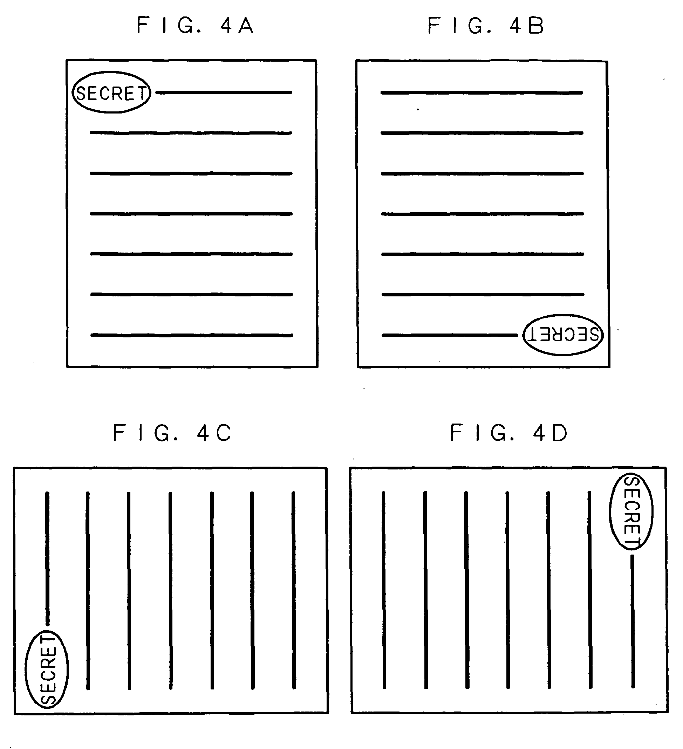

FIG. 4A through FIG. 4D, FIG. 5A through FIG. 5D and FIG. 6A through FIG. 6C are schematic diagrams showing examples of images expressed by the image data generated on the basis of the original image. FIG. 4A, FIG. 4B, FIG. 4C and FIG. 4D show the images expressed by the image data generated by reading the original image shown in FIG. 3A by the image reading unit 12. In order that the original image may be read by the line sensor 29, there are at least four patterns of mounting direction of the original on the original platen 21 or ADF 22. Since the image reading unit 12 generates image data showing the image depending on the state such as the direction of the original or the like when the original is mounted on the original platen 21 or ADF 22, four pattern images are obtained depending on the direction of the original. When the original is mounted so that the longitudinal direction of original image may be the main scanning direction, the image as shown in FIG. 4A is obtained, and when the original is mounted upside down in this state, the image as shown in FIG. 4B is obtained. When the original is mounted so that the longitudinal direction of original image may be the sub scanning direction, the image as shown in FIG. 4C is obtained, and when the original is mounted upside down in this state, the image as shown in FIG. 4D is obtained. In the four pattern images shown in FIG. 4A, FIG. 4B, FIG. 4C and FIG. 4D, the position of the predetermined image including the letter "SECRET" in the image is individually different. That is, the position of the predetermined image in the image expressed by the image data generated by the image reading unit 12 corresponds to the direction of the original mounted on the original platen 21 or ADF 22.

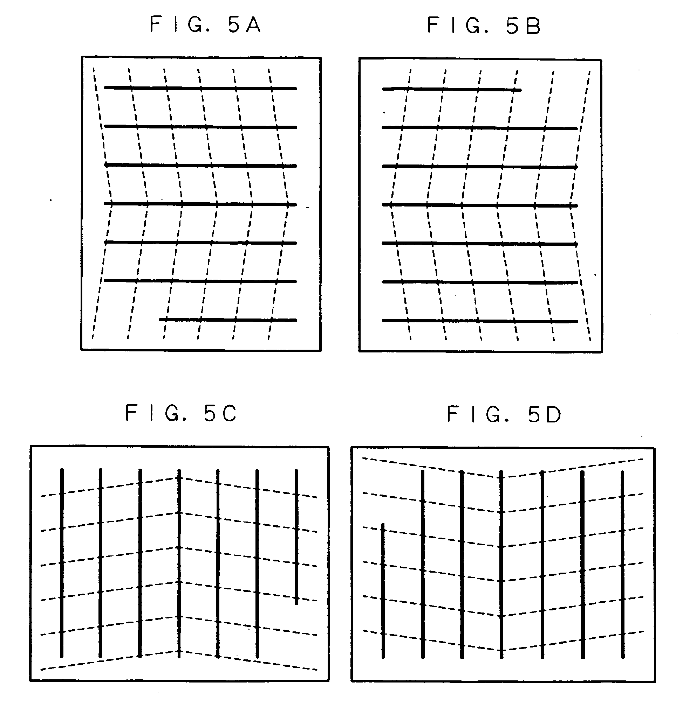

FIG. 5A, FIG. 5B, FIG. 5C and FIG. 5D show the images expressed by the image data generated when the original image shown in FIG. 3B is read by the image reading unit 12. When the original is mounted so that the longitudinal direction of original image may be the main scanning direction, the image as shown in FIG. 5A is obtained, and when the original is mounted upside down in this state, the image as shown in FIG. 5B is obtained. When the original is mounted so that the longitudinal direction of original image may be the sub scanning direction, the image as shown in FIG. 5C is obtained, and when the original is mounted upside down in this state, the image as shown in FIG. 5D is obtained. In four pattern images shown in FIG. 5A, FIG. 5B, FIG. 5C and FIG. 5D, the direction of pattern as the predetermined image in the image is individually different. That is, the direction of the predetermined image in the image expressed by the image data generated by the image reading unit 12 corresponds to the direction of the original mounted on the original platen 21 or ADF 22.

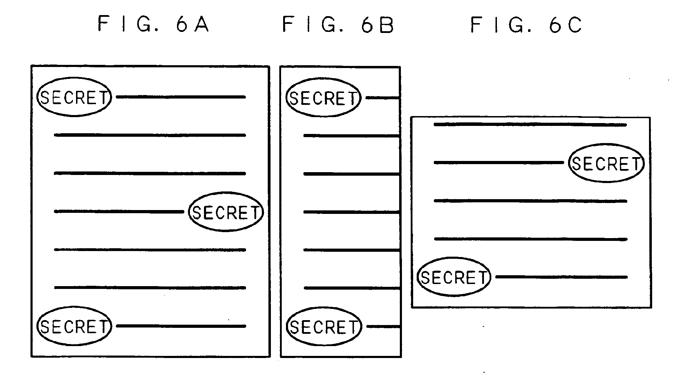

FIG. 6A, FIG. 6B and FIG. 6C show the images expressed by the image data generated when the original image shown in FIG. 3C is read by the image reading unit 12. When the original is mounted so that the whole of original image may be read, the image as shown in FIG. 6A is obtained. When the original is mounted so that the right half of original image may be concealed, the image lacking the right half as shown in FIG. 6B is obtained. When the original is mounted so that one-third of original image may be concealed, the image lacking the upper one-third as shown in FIG. 6C is obtained. In the images shown in FIG. 6A, FIG. 6B and FIG. 6C, the number of the predetermined images including the letter "SECRET" in the image is individually different. That is, the number of the predetermined images in the image expressed by the image data generated by the image reading unit 12 corresponds to the state of the original mounted on the original platen 21 or ADF 22 so that the original may be read partly.

As mentioned above, the layout state of the predetermined images such as position, direction or number in the image expressed by the image data generated by reading the original image corresponds to the state how the original is mounted on the original platen 21 or ADF 22. Accordingly, by permitting image processing only when the layout state of the predetermined image becomes predetermined layout state, image processing is done only when the user places the original on the original platen 21 or ADF 22 in predetermined state. This means that by informing the predetermined mounting state of original to only the user having official rights to copy the original image, illegal copy of the original image by unauthorized person not knowing the predetermined mounting state of original for image processing can be prevented. Further, by setting the layout state of the predetermined image in a rarely applied mounting state generally as the predetermined layout state by which image processing is permitted, probability of preventing illegal copy is much higher.

The registration unit 15 stores the identification information such as the password, ID data or the like for identifying the user having official rights to copy the protected original image. The registration unit 15 also stores the predetermined image data showing the predetermined image including the letter "SECRET", the pattern or the like, and the condition information showing the predetermined layout state of the predetermined image capable of processing the predetermined image data according to the predetermined image data.

As for the predetermined image included in the image shown in FIG. 3A, the predetermined position out of four positions of the predetermined images shown in FIG. 4A, FIG. 4B, FIG. 4C and FIG. 4D is set as predetermined layout state of the predetermined image. The direction of mounting the original corresponding to the image shown in FIG. 4B is generally low in frequency of use as compared with other directions, and it is preferred to set the position of the predetermined image in the image shown in FIG. 4B as predetermined layout state. As for the predetermined image included in the image shown in FIG. 3B, any one of four directions of the predetermined images shown in FIG. 5A, FIG. 5B, FIG. 5C and FIG. 5D is set as predetermined layout state of the predetermined image. As for plural predetermined images included in the image as shown in FIG. 3C, the original number of the predetermined images included in the image (three in this case) is set as predetermined layout state. Three predetermined images are originally included in the image as shown in FIG. 3C, number 3 is set as predetermined layout state. Thus, when the original is mounted so that the number of the predetermined images may be smaller than the original number, copying of part of the original image is prevented. To the contrary, when number 1 or 2 is set as predetermined layout state, the user having official rights to copy the original image can copy part of the original image, but entire copying of original image by unauthorized person can be prevented. The condition information showing the layout state of the predetermined image such as predetermined position, direction and number is preliminarily registered in the registration unit 15.

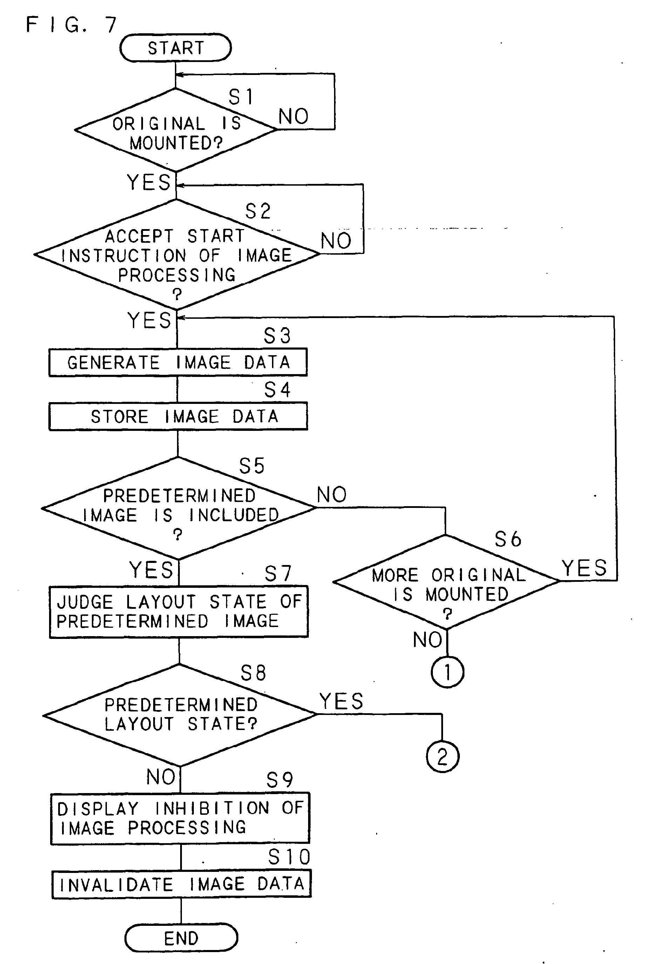

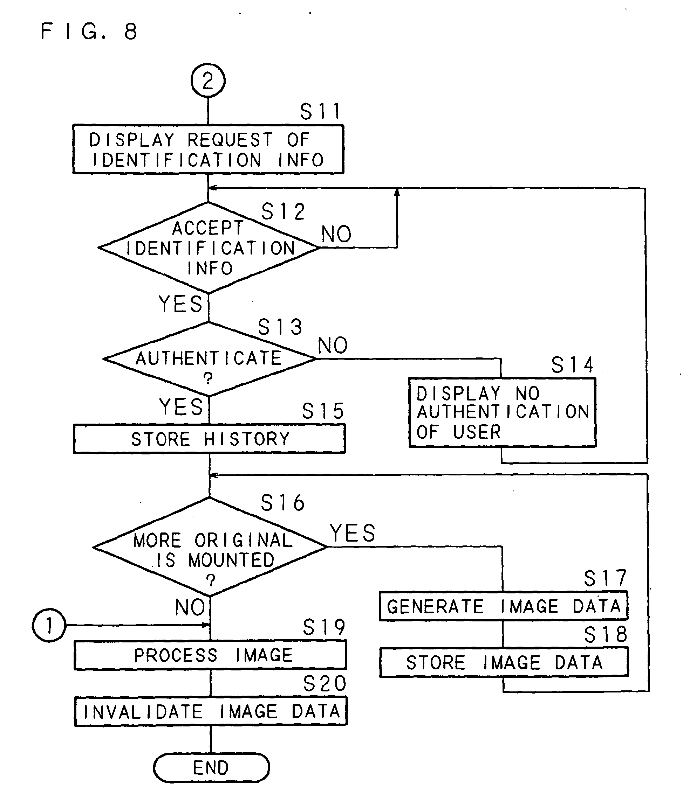

Next, processing by the image processing apparatus 1 of the invention is explained by referring to a flowchart. FIG. 7 and FIG. 8 are flowcharts showing the procedure of image processing by the image processing apparatus 1 of the invention, which is executed by the control unit 11 according to the control program stored in the ROM 161.

The control unit 11 is monitoring whether the original is mounted on the original platen 21 orADF 22 (S1). When the original is not mounted on the original platen 21 or ADF 22 (No at S1), the control unit 11 continues to monitor mounting of the original. When the original is mounted on the original platen 21 or ADF 22 (Yes at S1), the control unit 11 monitors acceptance of a start instruction of image processing in the operating unit 13 by user's operation of input unit of the operating unit 13 (S2). When the start instruction of image processing is not accepted (No at S2), the control unit 11 continues to monitor acceptance of the start instruction of image processing in the operation unit 13.

When the start instruction of image processing is accepted in the operating unit 13 (Yes at S2), the control unit 11 makes the image reading unit 12 read the original image recorded on the original mounted on the original platen 21 or ADF 22. The control unit 11, on the basis of the original image read by the image reading unit 12, generates image data expressing the image depending on the layout state of the original mounted on the mounting unit (S3). The control unit 11 then stores the generated image data in the storage unit 17 (S4), and judges whether the predetermined image is included in the image expressed by the image data or not (S5). This judgment can be done easily by using known pattern recognition or other technology. When the predetermined image is not included in the image expressed by the image data (No at S5), the control unit 11 judges whether the original is further mounted on the ADF 22 or not (S6). When the original is further mounted on the ADF 22 (Yes at S6), the control unit 11 returns to step S3, and further reads the original image. When the original is not mounted on the ADF 22 (No at S6), the control unit 11 makes the image forming unit 141 to execute image processing for forming an image on the basis of image data stored in the storage unit 17 (S19). After this image processing, the control unit 11 invalidates the image data stored in the storage unit 17 (S20), and terminates the process.

At step S5, when the predetermined image is included in the image expressed by the image data (Yes at S5), the control unit 11 judges the layout state such as position, direction or number of the predetermined images in the image expressed by the image data (S7). This judgment can be also easily done by using known pattern recognition or other technology. Next, the control unit 11 refers to the condition information stored in the registration unit 15, and judges whether the judged layout state of the predetermined image coincides with the condition information stored in the registration unit 15 or not, that is, whether it is the predetermined layout state allowing to process the image or not (S8). When the layout state of the predetermined image is not predetermined layout state (No at S8), the user at this point is recognized to be a user not knowing the predetermined layout state of original necessary for having a permission for image processing to copy a protected original image, that is, unauthorized user not having official rights to copy the protected original image. In this case, therefore, the control unit 11 prohibits image processing, and displays a message meaning that image processing is prohibited in the display unit of the operating unit 13 (S9). Next, the control unit 11 invalidates the image data stored in the storage unit 17 by, for example, overwriting random data or the like (S10), and terminates the process.

At step S8, when the layout state of the predetermined image is the predetermined layout state (Yes at S8), it is regarded that the original is placed by the user having official rights to copy the protected original image. In this case, the control unit 11 makes the display unit of the operating unit 13 display a message requesting input of identification information for identifying the user (S11). The control unit 11 monitors acceptance of identification information such as password or information recorded on the card carried by the user by user's operation of the operating unit 13 (S12). When identification information is not accepted (No at S12), the control unit 11 continues to monitor acceptance of identification information. When the identification information is accepted (Yes at S12), the control unit 11 judges whether the accepted identification information is authentic identification information coinciding with the identification information registered in the registration unit 15 or not (S13). When the accepted identification information is not authentic identification information (No at S13), the control unit 11 displays a message refusing authentication of the user in the display unit of the operating unit 13 (S14), and returns to step S12.

At step S13, when the accepted identification information is authentic identification information (Yes at S13), the control unit 11 permits image processing. In this case, the control unit 11, when permitting image processing, stores the history showing the information about permission of image processing such as the layout state of the predetermined image and identification information of the user, in the storage unit 17 (S15). Further, the control unit 11 judges whether the original is further mounted on the ADF 22 or not (S16). When the original is further mounted on the ADF 22 (Yes at S16), the control unit 11 makes the image reading unit 12 read the image of the original mounted on the ADF 22, and generate image data on the basis of the read original image (S17). The control unit 11 stores the generated image data in the storage unit 17 (S18), and returns to step S16.

At step S16, when the original is not mounted on the ADF 22 (No at S16), the control unit 11 makes the image forming unit 141 form an image on the basis of the image data stored in the storage unit 17 (S19). After completion of this image processing, the control unit 11 invalidates the image data stored in the storage unit 17 by, for example, overwriting random data or the like (S20), and terminates the process.

In the above processing, the image processing apparatus 1 of the invention authenticates the user by input of identification information at steps S11 through S14. However, by authenticating the user only by the layout state of the predetermined image in the read image, the process at steps S11 through S14 may be omitted. Also in the above processing, it is impossible for the image processing apparatus 1 of the invention to prohibit image processing when the specific image is not included in the original, but to the contrary, image processing may be prohibited when the specific image is not included in the original, that is, image is processed only in the original including the specific image. In this case, image may be processed only in the original including, for example, a specified logo mark (emblem of the company using the image processing apparatus 1 of the invention), so that it is possible to prevent random use of the image processing apparatus may be prevented.

As described herein, in the image processing apparatus of the invention, by generating image data expressing the image read from the original image, image processing is permitted or not depending on the layout state such as position or direction of the predetermined image in the image corresponding to the layout state such as direction of the original mounted on the original platen 21 or the ADF 22. As a result, it prevents execution of illegal image processing by a third person not knowing the predetermined layout state of the original necessary for obtaining permission for image processing. Only the official user having rights to copy the protected original image is preliminarily informed of the predetermined layout state of the original for image processing of copying the original image, and the user having official rights can be authenticated. The user is authenticated only by selecting a correct mounting state of the original, and the conventional complicated process for authenticating the user is not needed, and the convenience of image processing apparatus is enhanced.

In the image processing apparatus of the invention, the number of the predetermined images included in the image is judged as the layout state, and image processing is prohibited when the number of the predetermined images is less than the predetermined number, and illegal copying of part of original image including plural predetermined images can be prevented. To the contrary, by permitting image processing when the number of the predetermined images is less than the predetermined number, copying of part of original image by the user having official rights is enable, while coping of whole of the original image by illegal user can be prevented.

In the image processing apparatus of the invention, when the layout state of the predetermined image in the image is the predetermined layout state necessary for obtaining permission for image processing, by authenticating the user having official rights to copy the original image, illegal image processing of the original image by a third person not having official rights can be prevented more securely. Further, a shorter password than in the prior art can be used, and the process of authentication for keeping security same as in the prior art and preventing illegal copy of confidential information can be simplified, and the convenience of image processing apparatus is enhanced.

In the image processing apparatus of the invention, when reading plural originals sequentially, by authenticating the user only about a specific original, image processing of entire plural originals is enabled, and it is not necessary to authenticate in each original sequentially. Therefore, the required time for image processing of entire plural images can be shortened.

In the image processing apparatus of the invention, when image processing is prohibited, generated image data is invalidated, and illegal removal of image data stored in the image processing apparatus can be prevented, and illegal copy of confidential information is prevented and the security is improved.

In the image processing apparatus of the invention, image processing is copying of read original image, but it is not limited. For example, generated image data may be transmitted to other external device, or image data may be transmitted to external facsimile apparatus by facsimile communication, and other image processing may be executed, and such image processing can be limited.

## Claims

1. An image processing apparatus comprising: an original mounting unit (21 or 22) on which an original is mounted; an image reading unit (12) for reading the original image recorded on the original mounted on said original mounting unit (21 or 22) and generating image data expressing the original image; and an image processing unit (141) for processing the image data generated by said image reading unit (12); wherein said image reading unit (12) generates image data depending on the mounting state of the original on said original mounting unit (21 or 22), **characterized by** comprising:
a registration unit (15) preliminarily registering a predetermined image data expressing a predetermined image, and layout state information showing predetermined layout state of the predetermined image on the original image;
predetermined image judging means (11) for judging whether the predetermined image is included or not in the image expressed by the image data generated by said image reading unit (12) on the basis of the predetermined image data registered in said registration unit (15);
layout state judging means (11) for judging whether the layout state of the predetermined image in the image is the predetermined layout state or not, on the basis of the layout state information registered in said registration unit (15) when said predetermined image judging means (11) judges that the predetermined image is included;
deciding means (11) for deciding whether or not to permit processing of the image data by said image processing unit (141) depending on the judging result by said layout state judging means (11); and
means (11) for permitting or prohibiting processing of the image data by said image processing unit (141) depending on the decision result by said deciding means (11).

2. The image processing apparatus as set forth in claim 1, wherein
the layout state information registered in said registration unit (15) is information showing position of the predetermined image in the image expressed by the image data generated by said image reading unit (12), and
said layout state judging means (11) judges the position of the predetermined image in the image expressed by the image data.

3. The image processing apparatus as set forth in claim 1 or 2, wherein
the layout state information registered in said registration unit (15) is information showing direction of the predetermined image in the image expressed by the image data generated by said image reading unit (12), and
said layout state judging means (11) judges the direction of the predetermined image in the image expressed by the image data.

4. The image processing apparatus as set forth in any one of claims 1 to 3, wherein
the layout state information registered in said registration unit (15) is information showing number of the predetermined images in the image expressed by image data generated by said image reading unit (12), and
said layout state judging means (11) judges the number of the predetermined images in the image expressed by the image data.

5. The image processing apparatus as set forth in any one of claims 1 to 4, further comprising: an identification information registration unit (15) preliminarily registering identification information of a user; and an identification information accepting unit (13) for accepting identification information of a user;
wherein said identification information accepting unit (13) accepts identification information of a user when the judging result by said layout state judging means (11) coincides with the layout state information, and
said deciding means (11) permits processing of the image data by said image processing unit (141) when the identification information accepted by said identification information accepting unit (13) is preliminarily registered in said identification information registration unit (15).

6. The image processing apparatus as set forth in any one of claims 1 to 5, wherein
said original mounting unit (22) can mount a plurality of originals,
said image reading unit (12) can generate a plurality of image data by sequentially reading the original images recorded on the plurality of originals mounted on said original mounting unit (22), and
said deciding means (11) decides whether or not to permit processing of the plurality of image data by said image processing unit (141) on the basis of the judging result by said layout state judging unit (11) about the images expressed by the specific image data in the plurality of image data generated by said image reading unit (12).

7. The image processing apparatus as set forth in any one of claims 1 to 6, further comprising:
a storage unit (17) for temporarily storing the image data generated by said image reading unit (12) and then outputting to said image processing unit (141); and
invalidating means (11) for, when said deciding means (11) decides not to permit processing of image data by said image processing unit (141), invalidating the image data stored in said storage unit (17) decided not to permit processing, without outputting to said image processing unit (141).

## Patentansprüche

1. Bildverarbeitungsvorrichtung mit: einer Originalauflageeinheit (21 oder 22), auf welcher ein Original aufgelegt ist, einer Bildleseeinheit (12) zum Lesen des Originalbildes, welches auf dem Original, welches auf der Originalauflageeinheit (21 oder 22) aufgelegt ist, aufgezeichnet ist, und zum Erzeugen von Bilddaten, die das Originalbild wiedergeben, und einer Bildverarbeitungseinheit (141) zum Verarbeiten der von der Bildleseeinheit (12) erzeugten Bilddaten, wobei die Bildleseeinheit (12) die Bilddaten in Abhängigkeit vom Auflagezustand des Originals auf der Originalauflageeinheit (21 oder 22) erzeugt,
**gekennzeichnet durch**:
eine Registrierungseinheit (15), welche vorläufig vorbestimmte Bilddaten, die ein vorbestimmtes Bild wiedergeben, sowie Layoutzustandsinformation registriert, welche einen vorbestimmten Layoutzustand des vorbestimmten Bildes auf dem Originalbild zeigt,
eine Bestimmungseinrichtung (11) für das vorbestimmte Bild zum Bestimmen, ob das vorbestimmte Bild in dem Bild enthalten ist oder nicht, welches **durch** die Bilddaten wiedergegeben wird, die erzeugt wurden **durch** die Bildleseeinheit (12), und zwar auf der Grundlage der vorbestimmten Bilddaten, die in der Registrierungseinheit (15) registriert wurden,
eine Layoutzustandsbestimmungseinrichtung (11) zum Bestimmen, ob der Layoutzustand des vorbestimmten Bildes in dem Bild der vorbestimmte Layoutzustand ist oder nicht, und zwar auf der Grundlage der Layoutzustandsinformation, die in der Registrierungseinheit (15) registriert wurde, und zwar wenn die Bestimmungseinrichtung (11) für das vorbestimmte Bild bestimmt, dass das vorbestimmte Bild enthalten ist,
eine Entscheidungseinrichtung (11) zum Entscheiden, ob eine Verarbeitung der Bilddaten **durch** die Bildverarbeitungseinheit (141) erlaubt wird, und zwar abhängig von dem Bestimmungsergebnis **durch** die Layoutzustandsbestimmungseinrichtung (11), und
eine Einrichtung (11) zum Erlauben oder Verhindern einer Verarbeitung der Bilddaten **durch** die Bildverarbeitungseinheit (141) abhängig von dem Entscheidungsergebnis der Entscheidungseinrichtung (11).

2. Bildverarbeitungsvorrichtung nach Anspruch 1,
wobei die in der Registrierungseinheit (15) registrierte Layoutzustandsinformation Information ist, welche eine Position des vorbestimmten Bildes in dem Bild zeigt, welches durch die Bilddaten wiedergegeben wird, die durch die Bildleseeinheit (12) erzeugt wurden, und
wobei die Layoutzustandsbestimmungseinrichtung (11) die Position des vorbestimmten Bildes in dem durch die Bilddaten wiedergegebenen Bild ermittelt.

3. Bildverarbeitungsvorrichtung nach Anspruch 1 oder 2,
wobei die in der Registrierungseinheit (15) registrierte Layoutzustandsinformation eine Information ist, die eine Richtung des vorbestimmten Bildes in dem Bild zeigt, welches durch die Bilddaten wiedergegeben wird, die von der Bildleseeinheit (12) erzeugt wurden, und
wobei die Layoutzustandsbestimmungseinrichtung (11) die Richtung des vorbestimmten Bildes in dem durch die Bilddaten wiedergegebenen Bild ermittelt.

4. Bildverarbeitungsvorrichtung nach einem der Ansprüche 1 bis 3,
wobei die in der Registrierungseinheit (15) registrierte Layoutzustandsinformation eine Information ist, die die Anzahl der vorbestimmten Bilder in dem Bild zeigt, welches durch die Bilddaten wiedergegeben wird, die von der Bildleseeinheit (12) erzeugt wurden, und
die Layoutzustandsbestimmungseinrichtung (11) die Anzahl der vorbestimmten Bilder in dem durch die Bilddaten wiedergegebenen Bild bestimmt.

5. Bildverarbeitungsvorrichtung nach einem der Ansprüche 1 bis 4, welche des Weiteren aufweist:
eine Identifikationsinformationsregistrierungseinheit (15), welche I-dentifikationsinformation eines Benutzers vorläufig registriert, sowie eine Identifikationsinformationsannahmeeinheit (13), welche Identifikationsinformation eines Benutzers annimmt,
wobei die Identifikationsinformationsannahmeeinheit (13) die Identifikationsinformation eines Benutzers annimmt, wenn das Bestimmungsergebnis der Layoutzustandsbestimmungseinrichtung (11) mit der Layoutzustandsinformation übereinstimmt, und
wobei die Entscheidungseinrichtung (11) eine Verarbeitung der Bilddaten durch die Bildverarbeitungseinheit (141) erlaubt, wenn die Identifikationsinformation, die von der Identifikationsinformationsannahmeeinheit (13) angenommen wurde, in der Identifikationsinformationsregistrierungseinheit (15) vorläufig registriert wird.

6. Bildverarbeitungsvorrichtung nach einem der Ansprüche 1 bis 5,
wobei die Originalauflageeinheit (22) eine Mehrzahl von Originalen aufnehmen kann,
wobei die Bildleseeinheit (12) eine Mehrzahl von Bilddaten erzeugen kann durch sequentielles Lesen der Originalbilder, die auf der Mehrzahl von Originalen aufgezeichnet sind, die auf der Originalauflageeinheit (22) aufliegen, und
wobei die Entscheidungseinrichtung (11) entscheidet, ob die Verarbeitung der Mehrzahl von Bilddaten durch die Bildverarbeitungseinheit (141) erlaubt wird oder nicht auf der Grundlage des Bestimmungsergebnisses der Layoutzustandsbestimmungseinheit (11) im Hinblick auf die Bilder, die wiedergegeben werden durch die bestimmten Bilddaten in der Mehrzahl von Bilddaten, die erzeugt wurden durch die Bildleseeinheit (12).

7. Bildverarbeitungsvorrichtung nach einem der Ansprüche 1 bis 6, welche des Weiteren aufweist:
eine Speichereinheit (17) zum zeitweiligen Speichern der Bilddaten, die von der Bildleseeinheit (12) erzeugt wurden, und danach zum Ausgeben an die Bildverarbeitungseinheit (141),
eine Annulierungseinrichtung (11) zum Annulieren der in der Speichereinheit (17) gespeicherten Bilddaten, für die entschieden wurde, dass eine Verarbeitung nicht erlaubt wird, wenn die Entscheidungseinrichtung (11) entscheidet, eine Verarbeitung der Bilddaten durch die Bildverarbeitungseinheit (141) nicht zu erlauben, und zwar ohne ein Ausgeben an die Bildverarbeitungseinheit (141).

## Revendications

1. Appareil de traitement d'images, comprenant : une unité de mise en place d'original (21 ou 22) sur laquelle est mis en place un original ; une unité de lecture d'image (12) pour lire l'image originale figurant sur l'original mis en place sur ladite unité (21 ou 22) et pour générer des données d'image exprimant l'image originale ; et une unité de traitement d'image (141) pour traiter les données d'image générées par ladite unité de lecture d'image (12) ; étant précisé que l'unité de lecture d'image (12) génère des données d'image en fonction de l'état de mise en place de l'original sur l'unité de mise en place d'original (21 ou 22), **caractérisé en ce qu'**il comprend :
une unité d'enregistrement (15) qui enregistre au préalable des données d'image prédéterminée exprimant une image prédéterminée, et des informations d'état de mise en page montrant un état de mise en page prédéterminé de l'image prédéterminée sur l'image originale ;
des moyens d'estimation d'image prédéterminée (11) pour estimer si l'image prédéterminée est incluse ou non dans l'image exprimée par les données d'image générées par l'unité de lecture d'image (12) sur la base des données d'image prédéterminée enregistrées dans l'unité d'enregistrement (15) ;
des moyens d'estimation d'état de mise en page (11) pour estimer si l'état de mise en page de l'image prédéterminée, dans l'image, est l'état de mise en page prédéterminé ou pas, sur la base des informations d'état de mise en page enregistrées dans l'unité d'enregistrement (15) quand les moyens d'estimation d'image prédéterminée (11) estiment que l'image prédéterminée est incluse ;
des moyens de décision (11) pour décider s'il faut permettre ou non le traitement des données d'image par l'unité de traitement d'image (141) en fonction du résultat de l'estimation faite par les moyens d'estimation d'état de mise en page (11) ; et
des moyens (11) pour permettre ou interdire le traitement des données d'image par l'unité de traitement d'image (141) en fonction du résultat de la décision prise par les moyens de décision (11).

2. Appareil de traitement d'images tel que présenté dans la revendication 1, dans lequel
les informations d'état de mise en page enregistrées dans l'unité d'enregistrement (15) sont des informations qui montrent la position de l'image prédéterminée dans l'image exprimée par les données d'image générées par l'unité de lecture d'image (12), et
les moyens d'estimation d'état de mise en page (11) estiment la position de l'image prédéterminée dans l'image exprimée par les données d'image.

3. Appareil de traitement d'images tel que présenté dans la revendication 1 ou 2, dans lequel
les informations d'état de mise en page enregistrées dans l'unité d'enregistrement (15) sont des informations qui montrent la direction de l'image prédéterminée dans l'image exprimée par les données d'image générées par l'unité de lecture d'image (12), et
les moyens d'estimation d'état de mise en page (11) estiment la direction de l'image prédéterminée dans l'image exprimée par les données d'image.

4. Appareil de traitement d'images tel que présenté dans l'une quelconque des revendications 1 à 3, dans lequel
les informations d'état de mise en page enregistrées dans l'unité d'enregistrement (15) sont des informations qui montrent le nombre d'images prédéterminées dans l'image exprimée par les données d'image générées par l'unité de lecture d'image (12), et
les moyens d'estimation d'état de mise en page (11) estiment le nombre d'images prédéterminées dans l'image exprimée par les données d'image.

5. Appareil de traitement d'images tel que présenté dans l'une quelconque des revendications 1 à 4, comprenant par ailleurs : une unité d'enregistrement d'informations d'identification (15) qui enregistre au préalable des informations d'identification d'un utilisateur ; et une unité d'acceptation d'informations d'identification (13) pour accepter des informations d'identification d'un utilisateur ;
étant précisé que l'unité d'acceptation d'informations d'identification (13) accepte les informations d'identification d'un utilisateur quand le résultat de l'estimation faite par les moyens d'estimation d'état de mise en page (11) coïncide avec les informations d'état de mise en page, et que
les moyens de décision (11) permettent le traitement des données d'image par l'unité de traitement d'image (141) quand les informations d'identification acceptées par l'unité d'acceptation d'informations d'identification (13) sont enregistrées au préalable dans l'unité d'enregistrement d'informations d'identification (15).

6. Appareil de traitement d'images tel que présenté dans l'une quelconque des revendications 1 à 5, dans lequel
l'unité de mise en place d'original (22) peut recevoir plusieurs originaux,
l'unité de lecture d'image (12) peut générer plusieurs données d'image en lisant successivement les images originales figurant sur les originaux mis en place sur l'unité de mise en place d'original (22), et
les moyens de décision (11) décident s'il faut permettre ou non le traitement des données d'image par l'unité de traitement d'image (141) sur la base du résultat de l'estimation faite par l'unité d'estimation d'état de mise en page (11) concernant les images exprimées par les données d'image spécifiques dans les données d'image générées par l'unité de lecture d'image (12).

7. Appareil de traitement d'images tel que présenté dans l'une quelconque des revendications 1 à 6, comprenant par ailleurs :
une unité de stockage (17) pour stocker provisoirement les données d'image générées par l'unité de lecture d'image (12) et les sortir ensuite vers l'unité de traitement d'image (141) ; et
des moyens d'invalidation (11) pour invalider les données d'image stockées dans l'unité de stockage (17), quand les moyens de décision (11) décident de ne pas permettre le traitement des données d'image par l'unité de traitement d'image (141), sans sortir lesdites données vers l'unité de traitement d'image (141).
